# EUROPEAN PATENT APPLICATION

(11) **EP 3 565 243 A1**
(43) Date of publication of application: **06.11.2019**
(21) Application number: 17892150.8
(22) Date of filing: 21.06.2017
(51) Int. Cl.: H04N 9/73

(54) **METHOD AND APPARATUS FOR GENERATING SHOT INFORMATION**

(30) Priority: 20.01.2017 CN 201710052627
(71) Applicant: Huawei Technologies Co., Ltd., Longgang District Shenzhen, Guangdong 518129 (CN)
(72) Inventor: SONG, Lei, Shenzhen Guangdong 518129 (CN)
(74) Representative: Thun, Clemens
(86) International application number: PCT/CN2017/089313
(87) International publication number: WO 2018/133321

(57) **Abstract**

This application discloses a method for generating shot information, including: performing object recognition on a target frame picture; if a target object corresponding to the target frame picture is recognized, determining, based on a size proportion of the target object in the target frame picture, a target shot category corresponding to the target frame picture; and generating shot information of a first shot segment based on a location of the target frame picture in a video source and the target shot category and the target object that correspond to the target frame picture, where the first shot segment consists of a first set of frame pictures including the target frame picture, the first set of frame pictures include a plurality of continuous frame pictures in the video source, and the first set of frame pictures all correspond to the target object and the target shot category; and the shot information of the first shot segment includes: an identifier of the target object, an identifier of the target shot category, and a location identifier of the first shot segment in the video source. In addition, this application further discloses an apparatus for generating shot information.

## Description

This application claims priority to Chinese Patent Application CN201710052627.5, filed with the Chinese Patent Office on January 20, 2017 and entitled "METHOD AND DEVICE FOR CLASSIFYING VIDEOS BASED ON SHOT EFFECTS", which is incorporated herein by reference in its entirety.

### TECHNICAL FIELD

This application relates to the field of data processing technologies, and in particular, to a method and an apparatus for generating shot information.

### BACKGROUND

As more electronic devices can provide a video capture function, a user can record a video more conveniently. Usually, the user further needs to perform video clipping on an originally captured video source, to obtain a target video meeting a user requirement. During the video clipping, a plurality of shot segments may be obtained by cutting the video source, and these shot segments may be recombined and re-encoded to generate a target video. The user needs to spend a large amount of time searching the video source for an appropriate shot segment. Therefore, video clipping work is inconvenient for the user.

### SUMMARY

A technical problem to be resolved by this application is to provide a method and an apparatus for generating shot information, to provide related shot information for a shot segment in a video source, so that the shot information can be used to search for the shot segment, and a user can complete video clipping work more conveniently.

According to a first aspect, a method for generating shot information is provided. The method includes:
performing object recognition on a target frame picture;
if a target object corresponding to the target frame picture is recognized, determining, based on a size proportion of the target object in the target frame picture, a target shot category corresponding to the target frame picture; and
generating shot information of a first shot segment based on a location of the target frame picture in a video source and the target shot category and the target object that correspond to the target frame picture, where
the first shot segment consists of a first set of frame pictures including the target frame picture, the first set of frame pictures include a plurality of continuous frame pictures in the video source, and the first set of frame pictures all correspond to the target object and the target shot category; and
the shot information of the first shot segment includes: an identifier of the target object, an identifier of the target shot category, and a location identifier of the first shot segment in the video source.

Optionally,
when a plurality of objects are recognized from the target frame picture, if an object corresponding to a previous frame picture of the target frame picture exists in the plurality of objects, the target object is the object corresponding to the previous frame picture.

Optionally, the method further includes:
if no target object corresponding to the target frame picture is recognized, marking the target frame picture as a frame picture with no target object; and
generating shot information of a second shot segment based on the frame picture with no target object, where
the second shot segment consists of a second set of frame pictures including the target frame picture, the second set of frame pictures include a plurality of continuous frame pictures in the video source, and the second set of frame pictures are frame pictures with no target object; and
the shot information of the second shot segment includes: an identifier used to indicate that no target object exists, and a location identifier of the second shot segment in the video source.

Optionally, the location identifier of the first shot segment in the video source includes: an identifier of a start frame location of the first shot segment and an identifier of an end frame location of the first shot segment.

Optionally,
if the size proportion falls within a first proportion range, the target shot category is an establishing shot;
if the size proportion falls within a second proportion range, the target shot category is a panoramic shot;
if the size proportion falls within a third proportion range, the target shot category is a medium shot;
if the size proportion falls within a fourth proportion range, the target shot category is a close shot;
if the size proportion falls within a fifth proportion range, the target shot category is a close-up shot; or
if the size proportion falls within a sixth proportion range, the target shot category is an extreme close-up shot, where
the first proportion range is less than the second proportion range, the second proportion range is less than the third proportion range, the third proportion range is less than the fourth proportion range, the fourth proportion range is less than the fifth proportion range, and the fifth proportion range is less than the sixth proportion range.

Optionally, the method further includes:
receiving a query instruction for a shot segment, where the query instruction carries a query identifier, and the query identifier includes the identifier of the target object and/or the identifier of the target shot category;
searching for shot information having the query identifier, to obtain the shot information of the first shot segment; and
feeding back the first shot segment based on the location identifier that is of the first shot segment in the video source and that is in the shot information of the first shot segment.

According to a second aspect, an apparatus for generating shot information is provided. The apparatus includes:
a recognition unit, configured to perform object recognition on a target frame picture;
a determining unit, configured to: if a target object corresponding to the target frame picture is recognized, determine, based on a size proportion of the target object in the target frame picture, a target shot category corresponding to the target frame picture; and
a first generation unit, configured to generate shot information of a first shot segment based on a location of the target frame picture in a video source and the target shot category and the target object that correspond to the target frame picture, where
the first shot segment consists of a first set of frame pictures including the target frame picture, the first set of frame pictures include a plurality of continuous frame pictures in the video source, and the first set of frame pictures all correspond to the target object and the target shot category; and
the shot information of the first shot segment includes: an identifier of the target object, an identifier of the target shot category, and a location identifier of the first shot segment in the video source.

Optionally,
when a plurality of objects are recognized from the target frame picture, if an object corresponding to a previous frame picture of the target frame picture exists in the plurality of objects, the target object is the object corresponding to the previous frame picture.

Optionally, the apparatus further includes:
a marking unit, configured to: if no target object corresponding to the target frame picture is recognized, mark the target frame picture as a frame picture with no target object; and
a second generation unit, configured to generate shot information of a second shot segment based on the frame picture with no target object, where
the second shot segment consists of a second set of frame pictures including the target frame picture, the second set of frame pictures include a plurality of continuous frame pictures in the video source, and the second set of frame pictures are frame pictures with no target object; and
the shot information of the second shot segment includes: an identifier used to indicate that no target object exists, and a location identifier of the second shot segment in the video source.

Optionally, the location identifier of the first shot segment in the video source includes: an identifier of a start frame location of the first shot segment and an identifier of an end frame location of the first shot segment.

Optionally,
if the size proportion falls within a first proportion range, the target shot category is an establishing shot;
if the size proportion falls within a second proportion range, the target shot category is a panoramic shot;
if the size proportion falls within a third proportion range, the target shot category is a medium shot;
if the size proportion falls within a fourth proportion range, the target shot category is a close shot;
if the size proportion falls within a fifth proportion range, the target shot category is a close-up shot; or
if the size proportion falls within a sixth proportion range, the target shot category is an extreme close-up shot, where
the first proportion range is less than the second proportion range, the second proportion range is less than the third proportion range, the third proportion range is less than the fourth proportion range, the fourth proportion range is less than the fifth proportion range, and the fifth proportion range is less than the sixth proportion range.

Optionally, the apparatus further includes:
a receiving unit, configured to receive a query instruction for a shot segment, where the query instruction carries a query identifier, and the query identifier includes the identifier of the target object and/or the identifier of the first target shot category;
a searching unit, configured to search for shot information having the query identifier, to obtain the shot information of the first shot segment; and
a feedback unit, configured to feed back the first shot segment based on the location identifier that is of the first shot segment in the video source and that is in the shot information of the first shot segment.

According to a third aspect, an electronic device is provided. The electronic device includes a processor and a memory connected to the processor, where
the memory is configured to store a program instruction and data; and
the processor is configured to read the instruction and the data that are stored in the memory, to perform the following operations:
performing object recognition on a target frame picture;
if a target object corresponding to the target frame picture is recognized, determining, based on a size proportion of the target object in the target frame picture, a target shot category corresponding to the target frame picture; and
generating shot information of a first shot segment based on a location of the target frame picture in a video source and the target shot category and the target object that correspond to the target frame picture, where
the first shot segment consists of a first set of frame pictures including the target frame picture, the first set of frame pictures include a plurality of continuous frame pictures in the video source, and the first set of frame pictures all correspond to the target object and the target shot category; and
the shot information of the first shot segment includes: an identifier of the target object, an identifier of the target shot category, and a location identifier of the first shot segment in the video source.

Optionally, when a plurality of objects are recognized from the target frame picture, if an object corresponding to a previous frame picture of the target frame picture exists in the plurality of objects, the target object is the object corresponding to the previous frame picture.

Optionally, the processor is further configured to perform the following operations:
if no target object corresponding to the target frame picture is recognized, marking the target frame picture as a frame picture with no target object; and
generating shot information of a second shot segment based on the frame picture with no target object, where
the second shot segment consists of a second set of frame pictures including the target frame picture, the second set of frame pictures include a plurality of continuous frame pictures in the video source, and the second set of frame pictures are frame pictures with no target object; and
the shot information of the second shot segment includes: an identifier used to indicate that no target object exists, and a location identifier of the second shot segment in the video source.

Optionally, the location identifier of the first shot segment in the video source includes: an identifier of a start frame location of the first shot segment and an identifier of an end frame location of the first shot segment.

Optionally,
if the size proportion falls within a first proportion range, the target shot category is an establishing shot;
if the size proportion falls within a second proportion range, the target shot category is a panoramic shot;
if the size proportion falls within a third proportion range, the target shot category is a medium shot;
if the size proportion falls within a fourth proportion range, the target shot category is a close shot;
if the size proportion falls within a fifth proportion range, the target shot category is a close-up shot; or
if the size proportion falls within a sixth proportion range, the target shot category is an extreme close-up shot, where
the first proportion range is less than the second proportion range, the second proportion range is less than the third proportion range, the third proportion range is less than the fourth proportion range, the fourth proportion range is less than the fifth proportion range, and the fifth proportion range is less than the sixth proportion range.

Optionally, the electronic device further includes a transceiver connected to the processor, and the processor is further configured to perform the following operations:
triggering the transceiver to receive a query instruction for a shot segment, where the query instruction carries a query identifier, and the query identifier includes the identifier of the target object and/or the identifier of the target shot category;
searching for shot information having the query identifier, to obtain the shot information of the first shot segment; and
feeding back the first shot segment based on the location identifier that is of the first shot segment in the video source and that is in the shot information of the first shot segment.

In this application, a target object corresponding to a frame picture in a video source is recognized, and a target shot category corresponding to the frame picture is recognized based on a size proportion of the target object in the frame picture, so that a shot segment can be recognized from the video source based on the target object and the target shot category, and shot information that can be used to mark the target object corresponding to the shot segment, the target shot category corresponding to the shot segment, and a location of the shot segment in the video source can be generated for the shot segment. Therefore, during video clipping work, based on the shot information, a user can easily and rapidly find the corresponding shot segment by using the target object and/or the target shot category. In this case, the user can spend less time finding the appropriate shot segment, thereby completing the video clipping work more conveniently.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following description show merely some embodiments recorded in this application, and a person of ordinary skill in the art may derive other drawings from these accompanying drawings.
FIG. 1 is a schematic diagram of a network system framework used in an application scenario according to an embodiment of this application;
FIG. 2 is a schematic flowchart of a method for generating shot information according to an embodiment of this application;
FIG. 3 is a schematic diagram of examples of frame pictures in different shot categories by using a person as an object according to an embodiment of this application;
FIG. 4 is a schematic flowchart of a method for generating shot information according to an embodiment of this application;
FIG. 5 is a schematic flowchart of a method for querying for a shot segment according to an embodiment of this application;
FIG. 6 is a schematic structural diagram of an apparatus for generating shot information according to an embodiment of this application; and
FIG. 7 is a schematic structural diagram of hardware of an electronic device according to an embodiment of this application.

### DESCRIPTION OF EMBODIMENTS

A study by the inventor finds that, during video clipping, a user needs to spend a large amount of time searching a video source for an appropriate shot segment, making video clipping work inconvenient for the user. Based on this, in embodiments of this application, to help the user rapidly find the appropriate shot segment, the following processing may be performed on the video source: A target object corresponding to a frame picture in the video source is recognized, and a target shot category corresponding to the frame picture is recognized based on a size proportion of the target object in the frame picture; and if the target object can be recognized from each frame picture in a set of continuous frame pictures and each frame picture corresponds to the same target shot category, the set of continuous frame pictures is used as a shot segment, and shot information of the shot segment is generated. The shot information includes: an identifier of the target object, an identifier of the target shot category, and a location identifier corresponding to a first shot segment. After the foregoing processing, when the user needs to use the shot segment in the video source, based on the shot information, the user can easily and rapidly find the corresponding shot segment by using the target object and/or the target shot category. In this case, the user can spend less time finding the appropriate shot segment, thereby completing the video clipping work more conveniently.

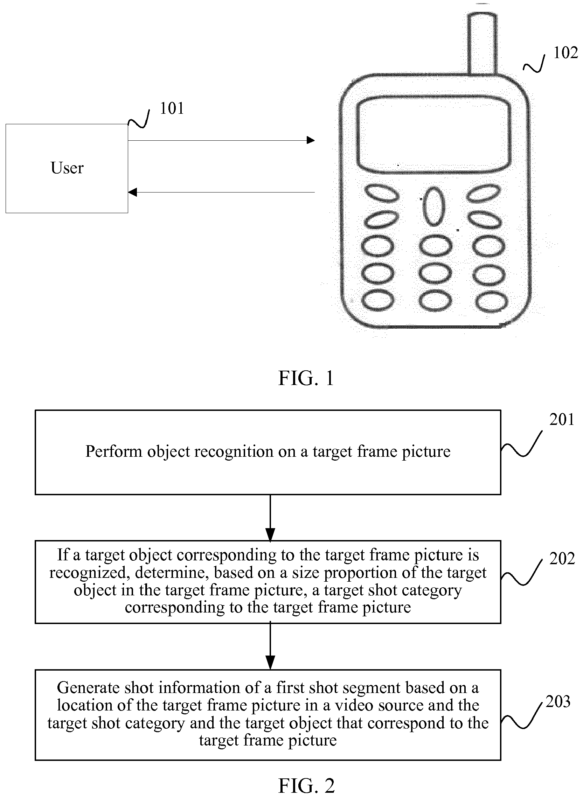

For example, the embodiments of this application may be applied to, for example, a scenario shown in FIG. 1. In this scenario, a user 101 may implement video photographing work and clipping work by interacting with a terminal 102. Specifically, after the user 101 photographs a video by operating the terminal 102, the terminal 102 captures a video source. Frame pictures in the video source are sequentially used as a target frame picture, and the terminal 102 may perform the following operations: performing object recognition on the target frame picture; if a target object corresponding to the target frame picture is recognized, determining, based on a size proportion of the target object in the target frame picture, a target shot category corresponding to the target frame picture; and generating shot information of a first shot segment based on a location of the target frame picture in a video source and the target shot category and the target object that correspond to the target frame picture, where the first shot segment consists of a first set of frame pictures including the target frame picture, the first set of frame pictures include a plurality of continuous frame pictures in the video source, and the first set of frame pictures all correspond to the target object and the target shot category; and the shot information of the first shot segment includes: an identifier of the target object, an identifier of the target shot category, and a location identifier of the first shot segment in the video source. After all the frame pictures in the video source are processed, shot information of each shot segment in the video source is stored in the terminal 102. When needing to query the terminal 102 for the shot segment, the user 101 may select the target object and/or the target shot category on the terminal 102, and the terminal 102 may find, based on the shot information, a shot segment corresponding to the target object and/or the target shot category and present the shot segment to the user 101.

It may be understood that, the foregoing scenario is only a scenario example provided in the embodiments of this application, and the embodiments of this application are not limited to this scenario.

Specific implementations of a method and an apparatus for generating shot information in the embodiments of this application are described in detail below by using embodiments with reference to the accompanying figures.

FIG. 2 is a schematic flowchart of a method for generating shot information according to an embodiment of this application. It may be understood that, video clipping is to remix different shot segments in a video source. This requires cutting, combination, and re-encoding of the video source based on the shot segments, to generate a new video with different expressiveness. A premise for cutting the video source is that a user can find a corresponding shot segment from the video source. In this embodiment, to help the user find a required shot segment, before clipping work, each frame picture in the video source may be processed to determine a shot segment to which each frame picture belongs, to generate shot information used to search for the shot segment. The video source consists of a series of frame pictures, and therefore, any frame picture in the video source may be used as a target frame picture on which the following step 201 to step 203 are performed.

201: Perform object recognition on the target frame picture.

In this embodiment, an object to be recognized from the target frame picture may be a person, or may be an object other than a person, such as an animal, a plant, an airplane, an automobile, a tank, a desk, and a chair.

If a person is used as a to-be-recognized object, face recognition may be performed on the target frame picture by using a face recognition technology, so that a recognized face is used as a recognized person object. If an object other than a person is used as a to-be-recognized object, based on a relevant feature of the to-be-recognized object, object recognition may be performed on the target frame picture by using a corresponding object recognition technology.

In this embodiment, the object recognition on the target frame picture is used to recognize the target object corresponding to the target frame picture. The target object may be understood as an object to be described by the target frame picture. It may be understood that, the target object corresponding to the target frame picture is an object recognized from the target frame picture. However, not all objects recognized from the target frame picture are the target object corresponding to the target frame picture. To recognize the target object corresponding to the target frame picture, object recognition results for the target frame picture may include the following three cases:
(1) No object is recognized from the target frame picture. In this case, no target object corresponding to the target frame picture is recognized from the target frame picture.
(2) Only one object is recognized from the target frame picture, and the object is a target frame object corresponding to the target frame picture.
(3) A plurality of objects are recognized from the target frame picture. In this case, the target object corresponding to the target frame picture may further be determined in the plurality of objects.

In an example, for the case (3), the target object corresponding to the target frame picture may be determined based on a previous frame picture of the target frame picture. Specifically, when a plurality of objects are recognized from the target frame picture, if an object corresponding to the previous frame picture of the target frame picture exists in the plurality of objects, the target object is the object corresponding to the previous frame picture.

For example, when the user photographs a person A, at first, only the person A exists in a shot picture, and then some passerby appear in a subsequent shot picture. However, in this case, a target object to be described by the shot picture is still the person A. In this case, when performing object recognition on some target frame pictures, a plurality of persons are recognized from the target frame pictures. In this case, a target object corresponding to the target frame picture may be determined based on a target object corresponding to a previous frame picture of the target frame picture. Because the target object corresponding to the previous frame picture is the person A, and the person A is included in the objects recognized from the target frame pictures, it may be determined that the target object corresponding to the target frame pictures is the person A.

In another example, for the case (3), the target object corresponding to the target frame picture may be determined based on a following frame picture of the target frame picture. Specifically, when a plurality of objects are recognized from the target frame picture, if an object corresponding to the following frame picture of the target frame picture exists in the plurality of objects, the target object is the object corresponding to the following frame picture.

For example, when the user photographs a person A, at first, a plurality of persons including the person A appear in a shot picture, and then gradually, only the person A is photographed in a subsequent shot picture. It can be learned that, an object actually to be described by the shot picture is the person A. In this case, when performing recognition on some target frame pictures, the plurality of persons are recognized from the target frame pictures. In this case, a target object corresponding to the target frame picture may be determined based on a target object corresponding to a following frame picture of the target frame picture. Because the target object corresponding to the following frame picture is the person A, and the person A is included in the objects recognized from the target frame pictures, it may be determined that the target object corresponding to the target frame pictures is the person A.

In still another example, for the case (3), the target object corresponding to the target frame picture may be determined based on a previous frame picture and a following frame picture of the target frame picture. Specifically, when a plurality of objects are recognized from the target frame picture, if an object corresponding to the previous frame picture of the target frame picture and an object corresponding to the following frame picture of the target frame picture are both the object A, and the object A exists in the plurality of objects, the target object is the object A.

In addition, for the case (3), although a plurality of objects are recognized from the target frame picture, the target object to be described by the target frame picture may not be determined in the plurality of objects. Therefore, when the plurality of objects are recognized from the target frame picture, there is a probability that the target object cannot be recognized from the target frame picture.

202: If a target object corresponding to the target frame picture is recognized, determine, based on a size proportion of the target object in the target frame picture, a target shot category corresponding to the target frame picture.

In this embodiment, a shot is a basic unit for forming a film. A shot category may include: an establishing shot, a panoramic shot, a medium shot, a close shot, a close-up shot, an extreme close-up shot, and the like. The target shot category may be any one of the shot categories described above.

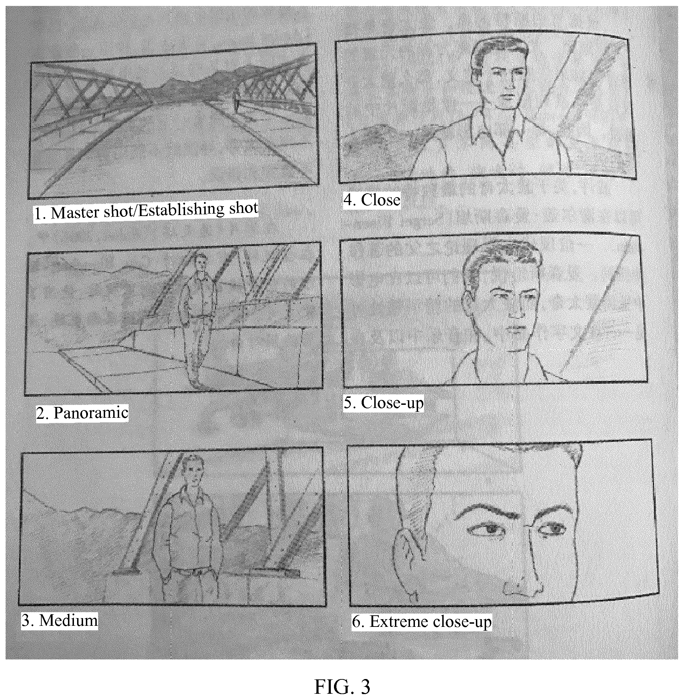

FIG. 3 is a schematic diagram of examples of frame pictures in different shot categories by using a person as an object. An establishing shot may also be understood as a master shot, and is usually a shot at the start of a film or the beginning of a play that is used to clarify a place. For example, the establishing shot may be a long shot with a wide view. A panoramic shot is mainly used to express a whole body of a person. The person has a relatively large range of activity in the panoramic shot. A body type, dressing and make-up, and an identity can be introduced relatively clearly in the panoramic shot, and an environment and props can also be clearly presented in the panoramic shot. Usually, when an indoor scene is photographed, the panoramic shot may be used as a scene category of a photograph at a total angle. Compared with a scope of scene included in the panoramic shot, a scope of scene included in a medium shot is reduced. An environment in which the person is located is at a secondary place in the medium shot, and the medium shot focuses on expressing an upper body movement of the person. A close shot can clearly present a subtle movement of the person and emphasize expressing a facial expression of the person. Therefore, the close shot can express an inner world of the person, and is a most powerful shot for depicting personality of the person. A close-up shot is a shot used to photograph a face of the person, a local portion of a human body, or a subtle portion of an article. An extreme close-up shot is a shot in which a subtle portion of a photographed object takes up an entire picture.

In this embodiment, a size proportion of a target object in a target frame picture may be a proportion of an overall area of the target object in a size of the target frame picture, or may be a proportion of an area of a part of the target object in a size of the target frame picture.

For example, assuming that the target object is a person A, a size proportion of the person A in the target frame picture may be a size proportion of an area of a face of the person A in the target frame picture. Therefore, the size proportion of the person A in a target picture may be calculated in the following manner: First, a face outline of the person A is analyzed, and the area of the face of the person A and a size of the target frame picture are determined based on the analyzed face outline. Then, the area of the face is divided by the size of the target frame picture, and an obtained proportion is the size proportion of the person A in the target frame picture. The area of the face may be, for example, a pixel area of the face, and the size of the target frame picture may be, for example, a pixel size of the target frame picture.

In an example, a target shot category corresponding to the target frame picture may be determined by setting corresponding size proportion ranges for different shot categories. For example, a first proportion range may be set for the establishing shot, so that if the size proportion falls within the first proportion range, the target shot category is the establishing shot. For another example, a second proportion range may be set for the panoramic shot, so that if the size proportion falls within the second proportion range, the target shot category is the panoramic shot. For still another example, a third proportion range may be set for the medium shot, so that if the size proportion falls within the third proportion range, the target shot category is the medium shot. For still another example, a fourth proportion range may be set for the close shot, so that if the size proportion falls within the fourth proportion range, the target shot category is the close shot. For still another example, a fifth proportion range may be set for the close-up shot, so that if the size proportion falls within the fifth proportion range, the target shot category is the close-up shot. For still another example, a sixth proportion range may be set for the extreme close-up shot, so that if the size proportion falls within the sixth proportion range, the target shot category is the extreme close-up shot. The first proportion range is less than the second proportion range, the second proportion range is less than the third proportion range, the third proportion range is less than the fourth proportion range, the fourth proportion range is less than the fifth proportion range, and the fifth proportion range is less than the sixth proportion range.

For example, assuming that the target object recognized from the target frame picture is the person A, the area of the face of the person A is s, and the size of the target frame picture is q, the size proportion of the area of the face in the target frame picture is r=s/q. If r<0.01, the target shot category corresponding to the target frame picture may be the establishing shot; if 0.01≤r≤0.02, the target shot may be the panoramic shot; if 0.02≤r≤0.1, the target shot may be the medium shot; if 0.1≤r≤0.2, the target shot is the close shot; if 0.2≤r≤0.33, the target shot may be the close-up shot; or if r≥0.75, the target shot may be the extreme close-up shot. It can be learned that in this example, the first proportion range is r<0.01, the second proportion range is 0.01 ≤r≤0.02, the third proportion range is 0.02≤r≤0.1, the fourth proportion range is 0.1≤r≤0.2, the fifth proportion range is 0.2≤r≤0.33, and the sixth proportion range is r≥0.75.

203: Generate shot information of a first shot segment based on a location of the target frame picture in a video source and the target shot category and the target object that correspond to the target frame picture.

The first shot segment consists of a first set of frame pictures including the target frame picture, the first set of frame pictures include a plurality of continuous frame pictures in the video source, and the first set of frame pictures all correspond to the target object and the target shot category.

The shot information of the first shot segment includes: an identifier of the target object, an identifier of the target shot category, and a location identifier of the first shot segment in the video source.

It may be understood that, the location identifier of the first shot segment in the video source may include, for example, an identifier of a start frame location of the first shot segment, and/or an identifier of an end frame location of the first shot segment. The identifier of the target object may be used to distinguish between different objects, and the different objects may use different digits, letters, or symbols as identifiers. The identifier of the target shot category may be used to distinguish between different shot categories, and the different shot categories may be represented by using different digits, letters, or symbols.

For example, it is assumed that the target object is a person, and after step 201 to step 203 are performed on each frame picture in the video source, shot information of each shot segment in the video source may be obtained:
shot 1: the person A, from an n1^{th} frame to an n2^{th} frame;
shot 2: a person B, from an n3^{th} frame to an n4^{th} frame;
shot 3: a person C, from an n5^{th} frame to an n6^{th} frame; and
shot 4: the person A, from an n7^{th} frame to an n8^{th} frame

The shot 1, the shot 2, the shot 3, and the shot 4 represent four different target shot categories. The person A, the person B, and the person C represent three different target objects. Locations of the four different shot segments in the video source are from the n1^{th} frame to the n2^{th} frame, from the n3^{th} frame to the n4^{th} frame, from the n5^{th} frame to the n6^{th} frame, and from the n7^{th} frame to the n8^{th} frame.

In an example, after the target frame picture is recognized, information marking may be performed on the target frame picture, and after all the frame pictures in the video source are marked, the shot information of the first shot segment is generated based on marking information of each frame picture.

The marking information of the target frame picture may include: the identifier of the target shot category, the identifier of the target object, and the location of the target frame picture in the video source. For example, the marking information of the target frame picture may be {n, a, X}, where n represents the location of the target frame picture, that is, the target frame picture is an n^{th} frame picture in the video source; a represents a recognized target object, assuming that the recognized target object is the person A, a may be specifically A, and assuming that the recognized target object is the person B, a may be specifically B; and X represents a recognized target shot category.

It may be understood that, a shot segment in the video source consists of a set of continuous frame pictures in the video source, and these frame pictures describe a same object by using a same shot category. Therefore, based on the marking information of each frame picture in the video source, a set of continuous frame pictures corresponding to a same target object and a same target shot category may be formed as a shot segment, and a location of the shot segment in the video source may be a location of the set of continuous frame pictures in the video source.

It should be noted that, during actual application, shot segments included in the video source can be determined only after a corresponding target object and target shot category are determined for each frame picture in the video source. Therefore, step 201 to step 202 may be sequentially performed on each frame picture in the video source. Then, based on a location of each frame picture in the entire video source and the corresponding target object and target shot category, the shot segments included in the video source are determined, and shot information is generated for the shot segments.

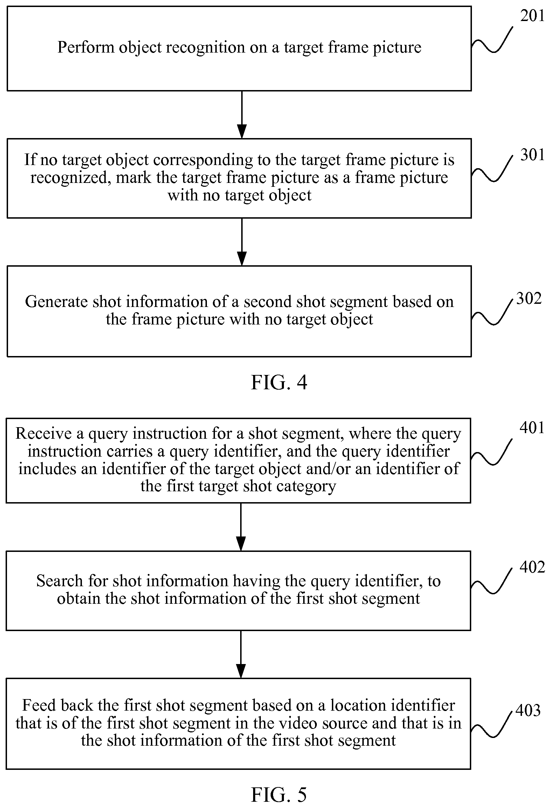

It may be understood that, when object recognition is performed on the target frame picture, there may be a case in which no target object is recognized. When no target object is recognized from the target frame picture, the target frame picture cannot be grouped into a shot segment based on the target object. To ensure that target frame pictures from which no target object is recognized can be grouped into particular shot segments, so that the user can search for these shot segments, in some implementations of this embodiment, as shown in FIG. 4, after step 201, the method may further include the following steps:
301: If no target object corresponding to the target frame picture is recognized, mark the target frame picture as a frame picture with no target object.
302: Generate shot information of a second shot segment based on the frame picture with no target object.

The second shot segment consists of a second set of frame pictures including the target frame picture, the second set of frame pictures include a plurality of continuous frame pictures in the video source, and the second set of frame pictures are frame pictures with no target object.

The shot information of the second shot segment includes: an identifier used to indicate that no target object exists, and a location identifier of the second shot segment in the video source.

It should be noted that, if the target object corresponding to the target picture cannot be recognized, there may be two cases: In one case, no object exists in the target frame picture. In the other case, there are a plurality of objects in the target frame picture, but the target object corresponding to the target frame picture cannot be determined in the plurality of objects.

For example, in a video recording process, instead of photographing a person, the user photographs only scenery for a period of time, and for another period of time, the user photographs a scene including a plurality of persons but a target person to be described by a shot cannot be determined in the plurality of persons. It can be learned that, in frame pictures generated in the two periods of time, a target object corresponding to the frame pictures cannot be recognized. In this case, a plurality of continuous frame pictures from which the target object cannot be recognized may be used as a second shot segment, and corresponding second shot segment information is generated.

In this embodiment, shot information generated for a shot segment may be used for video clipping work of the user. During the video clipping work of the user, the user may find a corresponding shot segment by using a target object and/or a target shot category, thereby greatly improving efficiency of querying for the shot segment by the user. Specifically, in some implementations, as shown in FIG. 5, after step 203, the method may further include the following steps.

401: Receive a query instruction for a shot segment, where the query instruction carries a query identifier, and the query identifier includes an identifier of the target object and/or an identifier of the target shot category.

During specific implementation, when the user enters a corresponding target object and/or target shot category to query for a shot segment, a query instruction having the identifier of the target object and/or an identifier of a first target shot category may be generated. A shot category of a shot segment to be queried for is the target shot category, and the shot segment to be queried for corresponds to the target object.

402: Search for shot information having the query identifier, to obtain the shot information of the first shot segment.

It can be learned from step 203 that, the shot information of the first shot segment may include: an identifier of the target object, an identifier of the target shot category, and a location identifier of the first shot segment in the video source. Therefore, when the shot information having the query identifier is searched for, the shot information of the first shot segment may be found.

403: Feed back the first shot segment based on the location identifier that is of the first shot segment in the video source and that is in the shot information of the first shot segment.

Based on the identifier of the target object and/or the identifier of the first target shot category, the shot information of the first shot segment is found, so that location information of the first shot segment can be learned of from the shot information.

In an example, the shot information of the first shot segment may be understood as a correspondence. In the correspondence, the identifier of the target object, the identifier of the target shot category, and the location identifier of the first shot segment in the video source correspond to each other. Therefore, based on the identifier of the target object and/or the identifier of the target shot category, the location identifier of the first shot segment in the video source can be found from the correspondence, so that the first shot segment is provided to the user, and the user can conveniently search the video source for the shot segment.

In addition, when the user intends to query for a second shot segment, and no corresponding target object exists in the second shot segment, the user may perform query based on an identifier indicating that no target object exists, to obtain shot information of the second shot segment, and feed back the second shot segment based on a location identifier that is of the second shot segment in the video source and that is included in the second shot information.

In this embodiment, a target object corresponding to a frame picture in a video source is recognized, and a target shot category corresponding to the frame picture is determined based on a size proportion of the target object in the frame picture, so that a shot segment can then be recognized from the video source based on the target object and the target shot category, and shot information that can be used to mark the target object corresponding to the shot segment, the target shot category corresponding to the shot segment, and a location of the shot segment in the video source can be generated for the shot segment. Therefore, during video clipping work, based on the shot information, a user can easily and rapidly find the corresponding shot segment by using the target object and/or the target shot category. In this case, the user can spend less time finding the appropriate shot segment, thereby completing the video clipping work more conveniently.

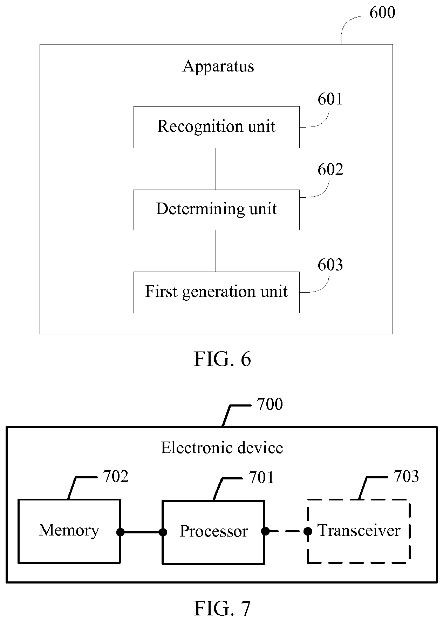

FIG. 6 is a schematic structural diagram of an apparatus for generating shot information according to an embodiment of this application. In this embodiment, the apparatus may include, for example:
a recognition unit 601, configured to perform object recognition on a target frame picture;
a determining unit 602, configured to: if a target object corresponding to the target frame picture is recognized, determine, based on a size proportion of the target object in the target frame picture, a target shot category corresponding to the target frame picture; and
a first generation unit 603, configured to generate shot information of a first shot segment based on a location of the target frame picture in a video source and the target shot category and the target object that correspond to the target frame picture, where
the first shot segment consists of a first set of frame pictures including the target frame picture, the first set of frame pictures include a plurality of continuous frame pictures in the video source, and the first set of frame pictures all correspond to the target object and the target shot category; and
the shot information of the first shot segment includes: an identifier of the target object, an identifier of the target shot category, and a location identifier of the first shot segment in the video source.

Optionally, when a plurality of objects are recognized from the target frame picture, if an object corresponding to a previous frame picture of the target frame picture exists in the plurality of objects, the target object is the object corresponding to the previous frame picture.

Optionally, the apparatus further includes:
a marking unit, configured to: if no target object corresponding to the target frame picture is recognized, mark the target frame picture as a frame picture with no target object; and
a second generation unit, configured to generate shot information of a second shot segment based on the frame picture with no target object, where
the second shot segment consists of a second set of frame pictures including the target frame picture, the second set of frame pictures include a plurality of continuous frame pictures in the video source, and the second set of frame pictures are frame pictures with no target object; and
the shot information of the second shot segment includes: an identifier used to indicate that no target object exists, and a location identifier of the second shot segment in the video source.

Optionally, the location identifier of the first shot segment in the video source includes: an identifier of a start frame location of the first shot segment and an identifier of an end frame location of the first shot segment.

Optionally,
if the size proportion falls within a first proportion range, the target shot category is an establishing shot;
if the size proportion falls within a second proportion range, the target shot category is a panoramic shot;
if the size proportion falls within a third proportion range, the target shot category is a medium shot;
if the size proportion falls within a fourth proportion range, the target shot category is a close shot;
if the size proportion falls within a fifth proportion range, the target shot category is a close-up shot; or
if the size proportion falls within a sixth proportion range, the target shot category is an extreme close-up shot, where
the first proportion range is less than the second proportion range, the second proportion range is less than the third proportion range, the third proportion range is less than the fourth proportion range, the fourth proportion range is less than the fifth proportion range, and the fifth proportion range is less than the sixth proportion range.

Optionally, the apparatus further includes:
a receiving unit, configured to receive a query instruction for a shot segment, where the query instruction carries a query identifier, and the query identifier includes the identifier of the target object and/or the identifier of the first target shot category;
a searching unit, configured to search for shot information having the query identifier, to obtain the shot information of the first shot segment; and
a feedback unit, configured to feed back the first shot segment based on the location identifier that is of the first shot segment in the video source and that is in the shot information of the first shot segment.

According to the apparatus provided in this embodiment, during video clipping work, based on generated shot information, a user can easily and rapidly find a corresponding shot segment by using a target object and/or a target shot category. In this case, the user can spend less time finding the appropriate shot segment, thereby completing the video clipping work more conveniently.

FIG. 7 is a schematic structural diagram of hardware of an electronic device according to an embodiment of this application. The electronic device 700 includes a processor 701 and a memory 702 connected to the processor 701.

The memory 702 is configured to store a program instruction and data.

The processor 701 is configured to read the instruction and the data stored in the memory 702, to perform the following operations:
performing object recognition on a target frame picture;
if a target object corresponding to the target frame picture is recognized, determining, based on a size proportion of the target object in the target frame picture, a target shot category corresponding to the target frame picture; and
generating shot information of a first shot segment based on a location of the target frame picture in a video source and the target shot category and the target object that correspond to the target frame picture, where
the first shot segment consists of a first set of frame pictures including the target frame picture, the first set of frame pictures include a plurality of continuous frame pictures in the video source, and the first set of frame pictures all correspond to the target object and the target shot category; and
the shot information of the first shot segment includes: an identifier of the target object, an identifier of the target shot category, and a location identifier of the first shot segment in the video source.

Optionally, when a plurality of objects are recognized from the target frame picture, if an object corresponding to a previous frame picture of the target frame picture exists in the plurality of objects, the target object is the object corresponding to the previous frame picture.

Optionally, the processor 701 is further configured to perform the following operations:
if no target object corresponding to the target frame picture is recognized, marking the target frame picture as a frame picture with no target object; and
generating shot information of a second shot segment based on the frame picture with no target object, where
the second shot segment consists of a second set of frame pictures including the target frame picture, the second set of frame pictures include a plurality of continuous frame pictures in the video source, and the second set of frame pictures are frame pictures with no target object; and
the shot information of the second shot segment includes: an identifier used to indicate that no target object exists, and a location identifier of the second shot segment in the video source.

Optionally, the location identifier of the first shot segment in the video source includes: an identifier of a start frame location of the first shot segment and an identifier of an end frame location of the first shot segment.

Optionally,
if the size proportion falls within a first proportion range, the target shot category is an establishing shot;
if the size proportion falls within a second proportion range, the target shot category is a panoramic shot;
if the size proportion falls within a third proportion range, the target shot category is a medium shot;
if the size proportion falls within a fourth proportion range, the target shot category is a close shot;
if the size proportion falls within a fifth proportion range, the target shot category is a close-up shot; or
if the size proportion falls within a sixth proportion range, the target shot category is an extreme close-up shot, where
the first proportion range is less than the second proportion range, the second proportion range is less than the third proportion range, the third proportion range is less than the fourth proportion range, the fourth proportion range is less than the fifth proportion range, and the fifth proportion range is less than the sixth proportion range.

Optionally, the electronic device further includes a transceiver 703 connected to the processor 701, and the processor 701 is further configured to perform the following operations:
triggering the transceiver 703 to receive a query instruction for a shot segment, where the query instruction carries a query identifier, and the query identifier includes the identifier of the target object and/or the identifier of the target shot category;
searching for shot information having the query identifier, to obtain the shot information of the first shot segment; and
feeding back the first shot segment based on the location identifier that is of the first shot segment in the video source and that is in the shot information of the first shot segment.

Optionally, the electronic device 700 may be specifically a mobile phone, a tablet computer, a personal digital assistant (Personal Digital Assistant, PDA), a point of sales (Point of Sales, POS), an in-vehicle computer, a laptop personal computer, a desktop personal computer, a minicomputer, a mid-range computer, or a mainframe computer, and the like. The processor 701 may be a central processing unit (central processing unit, CPU), a network processor, or a combination thereof. The processor 701 may further include a hardware chip. The memory 702 may be a random access memory (random access memory, RAM), a read-only memory (ROM), a hard disk, a solid-state drive, a flash memory, a compact disc, or any combination thereof. The transceiver 703 may include a wired physical interface, a wireless physical interface, or a combination thereof. The wired physical interface may be an electric interface, an optical interface, or a combination thereof, and may be, for example, an Ethernet interface or an asynchronous transfer mode (Asynchronous Transfer Mode, ATM) interface. The wireless physical interface may be a wireless local area network interface, a cellular mobile network interface, or a combination thereof. The processor 701, the memory 702, and the transceiver 703 may be integrated into one or more independent circuits.

"First" in the terms such as "first shot segment", "first proportion range", and "first generation unit " mentioned in the embodiments of this application is merely used to identify a name, and does not represent the first place in order. The rule is also applicable to "second" and the like.

It can be learned from the foregoing descriptions of the implementations, a person skilled in the art may clearly understand that some or all steps of the methods in the embodiments may be implemented by software in addition to a universal hardware platform. Based on such an understanding, the technical solutions of this application may be implemented in a form of a software product. The computer software product may be stored in a storage medium, such as a read-only memory (English: read-only memory, ROM)/RAM, a magnetic disk, or a compact disc, and includes several instructions for instructing a computer device (which may be a personal computer, a server, or a network communications device such as a router) to perform the methods described in the embodiments or some parts of the embodiments of this application.

The embodiments in this specification are all described in a progressive manner, for same or similar parts in the embodiments, refer to these embodiments, and each embodiment focuses on a difference from other embodiments. In particular, for the apparatus embodiments, because the apparatus embodiments are basically similar to the method embodiments, the apparatus embodiments are described simply, and the relevant part may be obtained with reference to the part of the description of the method embodiments. The described device and system embodiments are merely examples. The modules described as separate parts may or may not be physically separate, and parts displayed as modules may or may not be physical modules, may be located in one position, or may be distributed on a plurality of network units. Some or all of the modules may be selected according to actual needs to achieve the objectives of the solutions of the embodiments. A person of ordinary skill in the art may understand and implement the embodiments of this application without creative efforts.

The foregoing descriptions are merely example embodiments of this application, but are not intended to limit the protection scope of this application.

## Claims

1. A method for generating shot information, comprising:
performing object recognition on a target frame picture;
if a target object corresponding to the target frame picture is recognized, determining, based on a size proportion of the target object in the target frame picture, a target shot category corresponding to the target frame picture; and
generating shot information of a first shot segment based on a location of the target frame picture in a video source and the target shot category and the target object that correspond to the target frame picture, wherein
the first shot segment consists of a first set of frame pictures comprising the target frame picture, the first set of frame pictures comprise a plurality of continuous frame pictures in the video source, and the first set of frame pictures all correspond to the target object and the target shot category; and
the shot information of the first shot segment comprises: an identifier of the target object, an identifier of the target shot category, and a location identifier of the first shot segment in the video source.

2. The method according to claim 1, wherein
when a plurality of objects are recognized from the target frame picture, if an object corresponding to a previous frame picture of the target frame picture exists in the plurality of objects, the target object is the object corresponding to the previous frame picture.

3. The method according to claim 1, further comprising:
if no target object corresponding to the target frame picture is recognized, marking the target frame picture as a frame picture with no target object; and
generating shot information of a second shot segment based on the frame picture with no target object, wherein
the second shot segment consists of a second set of frame pictures comprising the target frame picture, the second set of frame pictures comprise a plurality of continuous frame pictures in the video source, and the second set of frame pictures are frame pictures with no target object; and
the shot information of the second shot segment comprises: an identifier used to indicate that no target object exists, and a location identifier of the second shot segment in the video source.

4. The method according to claim 1, wherein the location identifier of the first shot segment in the video source comprises: an identifier of a start frame location of the first shot segment and an identifier of an end frame location of the first shot segment.

5. The method according to claim 1, wherein
if the size proportion falls within a first proportion range, the target shot category is an establishing shot;
if the size proportion falls within a second proportion range, the target shot category is a panoramic shot;
if the size proportion falls within a third proportion range, the target shot category is a medium shot;
if the size proportion falls within a fourth proportion range, the target shot category is a close shot;
if the size proportion falls within a fifth proportion range, the target shot category is a close-up shot; or
if the size proportion falls within a sixth proportion range, the target shot category is an extreme close-up shot, wherein
the first proportion range is less than the second proportion range, the second proportion range is less than the third proportion range, the third proportion range is less than the fourth proportion range, the fourth proportion range is less than the fifth proportion range, and the fifth proportion range is less than the sixth proportion range.

6. The method according to claim 1, further comprising:
receiving a query instruction for a shot segment, wherein the query instruction carries a query identifier, and the query identifier comprises the identifier of the target object and/or the identifier of the target shot category;
searching for shot information having the query identifier, to obtain the shot information of the first shot segment; and
feeding back the first shot segment based on the location identifier that is of the first shot segment in the video source and that is in the shot information of the first shot segment.

7. An apparatus for generating shot information, comprising:
a recognition unit, configured to perform object recognition on a target frame picture;
a determining unit, configured to: if a target object corresponding to the target frame picture is recognized, determine, based on a size proportion of the target object in the target frame picture, a target shot category corresponding to the target frame picture; and
a first generation unit, configured to generate shot information of a first shot segment based on a location of the target frame picture in a video source and the target shot category and the target object that correspond to the target frame picture, wherein
the first shot segment consists of a first set of frame pictures comprising the target frame picture, the first set of frame pictures comprise a plurality of continuous frame pictures in the video source, and the first set of frame pictures all correspond to the target object and the target shot category; and
the shot information of the first shot segment comprises: an identifier of the target object, an identifier of the target shot category, and a location identifier of the first shot segment in the video source.

8. The apparatus according to claim 7, wherein
when a plurality of objects are recognized from the target frame picture, if an object corresponding to a previous frame picture of the target frame picture exists in the plurality of objects, the target object is the object corresponding to the previous frame picture.

9. The apparatus according to claim 7, further comprising:
a marking unit, configured to: if no target object corresponding to the target frame picture is recognized, mark the target frame picture as a frame picture with no target object; and
a second generation unit, configured to generate shot information of a second shot segment based on the frame picture with no target object, wherein
the second shot segment consists of a second set of frame pictures comprising the target frame picture, the second set of frame pictures comprise a plurality of continuous frame pictures in the video source, and the second set of frame pictures are frame pictures with no target object; and
the shot information of the second shot segment comprises: an identifier used to indicate that no target object exists, and a location identifier of the second shot segment in the video source.

10. The apparatus according to claim 7, wherein the location identifier of the first shot segment in the video source comprises: an identifier of a start frame location of the first shot segment and an identifier of an end frame location of the first shot segment.

11. The apparatus according to claim 7, wherein
if the size proportion falls within a first proportion range, the target shot category is an establishing shot;
if the size proportion falls within a second proportion range, the target shot category is a panoramic shot;
if the size proportion falls within a third proportion range, the target shot category is a medium shot;
if the size proportion falls within a fourth proportion range, the target shot category is a close shot;
if the size proportion falls within a fifth proportion range, the target shot category is a close-up shot; or
if the size proportion falls within a sixth proportion range, the target shot category is an extreme close-up shot, wherein
the first proportion range is less than the second proportion range, the second proportion range is less than the third proportion range, the third proportion range is less than the fourth proportion range, the fourth proportion range is less than the fifth proportion range, and the fifth proportion range is less than the sixth proportion range.

12. The apparatus according to claim 7, further comprising:
a receiving unit, configured to receive a query instruction for a shot segment, wherein the query instruction carries a query identifier, and the query identifier comprises the identifier of the target object and/or the identifier of the first target shot category;
a searching unit, configured to search for shot information having the query identifier, to obtain the shot information of the first shot segment; and
a feedback unit, configured to feed back the first shot segment based on the location identifier that is of the first shot segment in the video source and that is in the shot information of the first shot segment.

13. An electronic device, comprising a processor and a memory connected to the processor, wherein
the memory is configured to store a program instruction and data; and
the processor is configured to read the instruction and the data that are stored in the memory, to perform the following operations:
performing object recognition on a target frame picture;
if a target object corresponding to the target frame picture is recognized, determining, based on a size proportion of the target object in the target frame picture, a target shot category corresponding to the target frame picture; and
generating shot information of a first shot segment based on a location of the target frame picture in a video source and the target shot category and the target object that correspond to the target frame picture, wherein
the first shot segment consists of a first set of frame pictures comprising the target frame picture, the first set of frame pictures comprise a plurality of continuous frame pictures in the video source, and the first set of frame pictures all correspond to the target object and the target shot category; and
the shot information of the first shot segment comprises: an identifier of the target object, an identifier of the target shot category, and a location identifier of the first shot segment in the video source.

14. The electronic device according to claim 13, wherein
when a plurality of objects are recognized from the target frame picture, if an object corresponding to a previous frame picture of the target frame picture exists in the plurality of objects, the target object is the object corresponding to the previous frame picture.

15. The electronic device according to claim 13, wherein the processor is further configured to perform the following operations:
if no target object corresponding to the target frame picture is recognized, marking the target frame picture as a frame picture with no target object; and
generating shot information of a second shot segment based on the frame picture with no target object, wherein
the second shot segment consists of a second set of frame pictures comprising the target frame picture, the second set of frame pictures comprise a plurality of continuous frame pictures in the video source, and the second set of frame pictures are frame pictures with no target object; and
the shot information of the second shot segment comprises: an identifier used to indicate that no target object exists, and a location identifier of the second shot segment in the video source.

16. The electronic device according to claim 13, wherein the location identifier of the first shot segment in the video source comprises: an identifier of a start frame location of the first shot segment and an identifier of an end frame location of the first shot segment.

17. The electronic device according to claim 13, wherein
if the size proportion falls within a first proportion range, the target shot category is an establishing shot;
if the size proportion falls within a second proportion range, the target shot category is a panoramic shot;
if the size proportion falls within a third proportion range, the target shot category is a medium shot;
if the size proportion falls within a fourth proportion range, the target shot category is a close shot;
if the size proportion falls within a fifth proportion range, the target shot category is a close-up shot; or
if the size proportion falls within a sixth proportion range, the target shot category is an extreme close-up shot, wherein
the first proportion range is less than the second proportion range, the second proportion range is less than the third proportion range, the third proportion range is less than the fourth proportion range, the fourth proportion range is less than the fifth proportion range, and the fifth proportion range is less than the sixth proportion range.

18. The electronic device according to claim 13, wherein the electronic device further comprises a transceiver connected to the processor, and the processor is further configured to perform the following operations:
triggering the transceiver to receive a query instruction for a shot segment, wherein the query instruction carries a query identifier, and the query identifier comprises the identifier of the target object and/or the identifier of the target shot category;
searching for shot information having the query identifier, to obtain the shot information of the first shot segment; and
feeding back the first shot segment based on the location identifier that is of the first shot segment in the video source and that is in the shot information of the first shot segment.
